# EUROPEAN PATENT APPLICATION

(11) **EP 3 541 039 A1**
(43) Date of publication of application: **18.09.2019**
(21) Application number: 18305283.6
(22) Date of filing: 15.03.2018
(51) Int. Cl.: H04L 29/06

(54) **METHOD AND APPARATUS FOR ACCESSING CONTROLLED DATA**

(71) Applicant: Nokia Solutions and Networks Oy, 02610 Espoo (FI)
(72) Inventor: Saleh, George, 78990 Elancourt (FR); Draskovic, Drasko, 75014 PARIS (FR)
(74) Representative: Novagraaf Technologies

(57) **Abstract**

An apparatus comprises means for performing access of controlled data, the controlled data being accessible through data parameters comprising a network address, the means are configured to perform:
• adding (205) the data parameters to a blockchain;
• recording a right to access the controlled data by a right acquirer, said recording comprising inserting a transaction in the blockchain associated to the data parameters;
• associating to the transaction a temporary address generated specifically for the transaction;
• sending (207) the temporary address to the right acquirer for enabling the data access.

## Description

### Technical Field

Various example embodiments relate to method and apparatus for accessing controlled data.

### Background

When data has any value, the owner would like to give access to data only through a monetary transaction in which access is given in exchange of some common agreed money amount.

Generally, to organize the transactions a trusted third party sets up a marketplace in which seller reputation is analyzed and presented to potential buyers and the transaction is secured by verifying that each party fulfills its part of the contract. This type of organization is directly derived from marketplace for physical goods. Examples of this type of market can be found in domains where data are associated with intellectual property rights such as music.

With the arrival of the "Internet of Things" (loT), the quantity of data is going to increase as level unknown up to now and everyone may be in a situation where some of his/her apparatus generate data which may have value to other.

### Summary

However, it appears difficult to organize traditional marketplace with a lot of individuals having data to sell and at same time, the value of each data collection being very low as the cost of transaction may exceed the value of the transaction.

In a first example embodiment, an apparatus comprises means for performing access of controlled data, the controlled data being accessible through data parameters comprising a network address, the means are configured to perform:
- adding the data parameters to a blockchain;
- recording a right to access the controlled data by a right acquirer, said recording comprising inserting a transaction in the blockchain associated to the data parameters;
- associating to the transaction a temporary address generated specifically for the transaction;
- sending the temporary address to the right acquirer for enabling the data access.

Advantageously, the right acquirer has never accessed to the original address of the data. The provider is thus protected from any non-agreed access to his/her data.

This embodiment may comprises other features, alone or in combination, such as:
- the temporary address has a limited life period;
- the means are further configured to perform payment recorded into the blockchain after the right acquirer has accessed the stream;
- the temporary address is randomly generated;
- the temporary address is stored in a memory space outside the blockchain, said memory space being protected by an authentication mechanism;
- the transaction is managed by a smart contract of the blockchain;
- the means comprises
   - at least one processor; and
   - at least one memory including computer program code, the at least one memory and computer program code configured to, with the at least one processor, cause the performance of the apparatus.

In a second example embodiment, a method for performing access of controlled data, the controlled data being accessible through data parameters comprising a network address, comprises:
- adding the data parameters to a blockchain;
- recording a right to access the controlled data by a right acquirer, said recording comprising the step of inserting a transaction in the blockchain associated to the data parameters;
- associating to the transaction a temporary address generated specifically for the transaction;
- sending the temporary address to the right acquirer for enabling the data access.

In a third example embodiment, a computer readable medium is encoding a machine-executable program of instructions to perform a method as here above.

### Brief Description of the Figures

Some embodiments are now described, by way of example only, and with reference to the accompagnying drawings, in which :
- The FIG. 1 schematically illustrates architecture and flows of transactions of data with the help of a blockchain; and
- The FIG. 2 schematically illustrates a transaction flow.

### Description of Embodiments

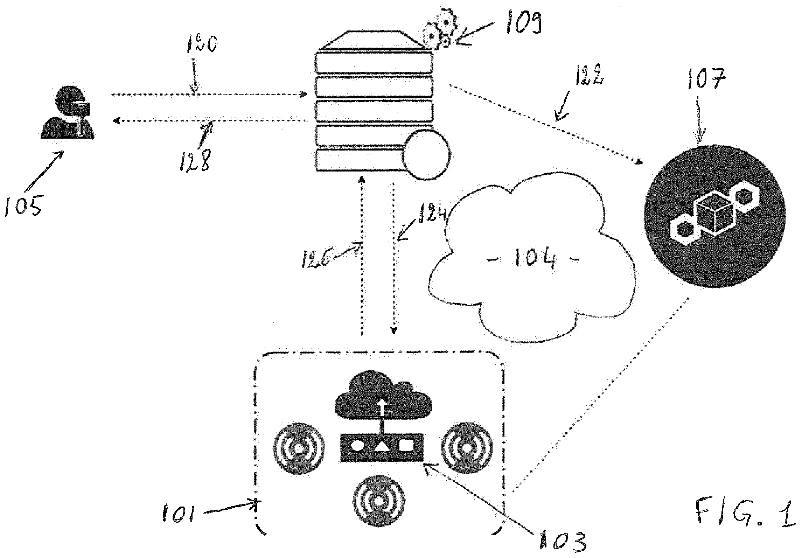

In reference to FIG. 1, a provider 101 owns data having some value. Typically, the provider 101 owns an apparatus 103, for instance a weather station, which generates a stream of data, for instance the weather temperature every minutes. The data is located at an address in the data network 104. In the example, the network 104 is an internet network and the data address has the form of a Uniform Resource Locator, URL, as defined in RFC 3986.

A stream consumer 105 is interested to access data generated by the apparatus 103 and is ready to pay some amount for that.

A blockchain 107 is set up to receive and validate transactions, and particularly a transaction between the provider 101 and the consumer 105.

A proxy 109 is set up as a front-end to the consumer for receiving his/her access request and providing the requested data.

Every elements of FIG. 1 can be organized as a specific circuit, or computer or can be a functional circuit, part of a common server or any partition in between.

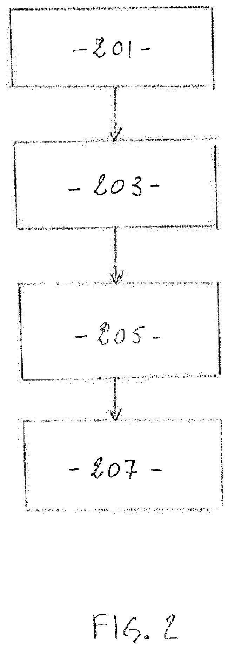

A method for accessing data based on these elements will now be disclosed, FIG. 2.

In a preliminary step 201, the provider 101 and the consumer 105 need to open an account in the blockchain in order to be identified and to be able to exchange blockchain tokens.

Then, the provider 101 offers , step 203, access to apparatus 103 data. For that, he accesses the proxy 109, for instance via a form, and gives at least the apparatus URL and possibly other data such as an expiration date of the offer and the cost, in token, of the access.

Based on the provided information, the proxy 109 generates, step 205, a routing record into the blockchain containing:
- A random number representing a unique route path. Typically, the unique route path is generated by a cryptographically strong pseudorandom generator. By unique, it means that this entry is specific to this record inside all the blockchain;
- The apparatus 103 URL. It is thus the actual valid public URL where data are accessible;
- A time to live, i.e. a duration of validity for the routing record, for instance in hours;
- A creation date; and
- An expiration date.

Due to the blockchain features, this record is unmutable, i.e. it cannot be modified, as soon as it has been entered and validated.

The consumer 105 decides to access apparatus 103 data and to pay for that the requested tokens. The blockchain 107 secures the transaction by recording it, the transaction record comprising a link to the routing record and the consumer 105 receives, step 207, a proxy dynamic URL, i.e. a dynamically generated URL known only by the consumer 105. Typically the proxy dynamic URL is generated by the proxy 109 which is triggered by a smart contract of the blockchain associated with the transaction, and contains a link with the unique route path. The link may be a record link in a table contained by the proxy 109 or a cryptographic link or any other means enabling the proxy to extract the route path when it receives the proxy dynamic URL.

When the consumer 105 decides to access the apparatus 103 data, FIG.1, he sends, step 120, a request containing the proxy dynamic URL to the proxy 109.

At step 122, the proxy 109 extracts the route path, uses it as a key to find the matching record in the blockchain 107 and validates the access by checking detailed data of the record and particularly the expiration date.

From the blockchain record, the proxy 109 extracts also the apparatus 103 URL and is thus able, by proxy forwarding mechanism, to request data from the apparatus 103, step 124.

As response, the apparatus 103 sends back, step 126, data to the proxy 109 which redirects data to the consumer 105, step 128.

At the end of the access period as defined by the expiration date, the proxy 109 sends information to the blockchain 107 in order to validate the transaction so that the defined tokens are transferred from the consumer 105 account to the provider 101 account.

In order to outline the main steps and mechanisms, all details are not disclosed in the example. For instance, mechanisms of authentication can be put in place between the consumer 105 and the proxy 109 in order to be sure that the access is given to the right person. Depending of the level of security required, different types of authentication may be installed: classical username/password, or JSON Web Token (JWT), or any other authentication mechanism.

So, it appears that the consumer 105 has never accessed to the original URL of the apparatus 103. The provider is thus protected from any non-agreed access to his/her apparatus.

The disclosed method can be executed on an apparatus comprising
- at least one processor; and
- at least one memory including computer program code, the at least one memory and computer program code configured to, with the at least one processor, cause the apparatus:
   - adding the data parameters to a blockchain;
   - recording a right to access the controlled data by a right acquirer, said recording comprising the step of inserting a transaction in the blockchain associated to the data parameters;
   - associating to the transaction a temporary address generated specifically for the transaction;
   - sending the temporary address to the right acquirer for enabling the data access.

A person of skill in the art would readily recognize that steps of various above-described methods can be performed by programmed computers. Herein, some embodiments are also intended to cover program storage devices, e.g., digital data storage media, which are machine or computer readable and encode machine- executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

As used in this application, the term "circuitry" may refer to one or more or all of the following:
- hardware-only circuit implementations (such as implementations in only analog and/or digital circuitry) and
- combinations of hardware circuits and software, such as (as applicable):
   - a combination of analog and/or digital hardware circuit(s) with software/firmware and
   - any portions of hardware processor(s) with software (including digital signal processor(s)), software, and memory(ies) that work together to cause an apparatus, such as a mobile phone or server, to perform various functions) and
- hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Apparatus comprising means for performing access of controlled data, the controlled data being accessible through data parameters comprising a network address, the means are configured to perform:
• adding the data parameters to a blockchain;
• recording a right to access the controlled data by a right acquirer, said recording comprising inserting a transaction in the blockchain associated to the data parameters;
• associating to the transaction a temporary address generated specifically for the transaction;
• sending the temporary address to the right acquirer for enabling the data access.

2. Apparatus according to claim 1, wherein the temporary address has a limited life period.

3. Apparatus according to claim 1 or 2, wherein the means are further configured to perform payment recorded into the blockchain after the right acquirer has accessed the stream.

4. Apparatus according to any preceding claim, wherein the temporary address is randomly generated.

5. Apparatus according to claim 4, wherein the temporary address is stored in a memory space outside the blockchain, said memory space being protected by an authentication mechanism.

6. Apparatus according to any preceding claim, wherein the transaction is managed by a smart contract of the blockchain.

7. The apparatus of any preceding claim wherein the means comprises
• at least one processor; and
• at least one memory including computer program code, the at least one memory and computer program code configured to, with the at least one processor, cause the performance of the apparatus.

8. A method for performing access of controlled data, the controlled data being accessible through data parameters comprising a network address, comprising:
• adding (205) the data parameters to a blockchain;
• recording a right to access the controlled data by a right acquirer, said recording comprising the step of inserting a transaction in the blockchain associated to the data parameters;
• associating to the transaction a temporary address generated specifically for the transaction;
• sending (207) the temporary address to the right acquirer for enabling the data access.

9. A computer readable medium encoding a machine-executable program of instructions to perform a method according to claim 8.
